# EUROPEAN PATENT SPECIFICATION

(11) **EP 0 923 875 B1**
(45) Date of publication and mention of the grant of the patent: **18.12.2002**
(21) Application number: 98203599.0
(22) Date of filing: 26.10.1998
(51) Int. Cl.: A23G 1/20, A23G 3/20

(54) **Method for making food articles using counter rotating rollers**
Verfahren zur Herstellung von Lebensmitteln unter Verwendung von einläufig rotierenden Walzen
PROCEDE DE FABRICATION DES ARTICLES ALIMENTAIRES UTILISANT DES CYLINDRES A CONTRE ROTATION

(30) Priority: 16.12.1997 GB 9726562
(43) Date of publication of application: 23.06.1999
(73) Proprietor: SOCIETE DES PRODUITS NESTLE S.A., 1800 Vevey (CH)
(72) Inventor: Leadbeater, John Michael, Strensall, York YO3 5AZ (GB)

(56) References cited:
- WO-A-91/08674
- WO-A-98/38871
- DE-B- 1 223 677
- GB-A- 641 682
- GB-A- 1 178 059
- PATENT ABSTRACTS OF JAPAN vol. 011, no. 297 (C-448), 25 September 1987 & JP 62 087056 A (EZAKI GLYCO KK), 21 April 1987

## Description

The present invention relates to manufacturing of food articles, in particular to the manufacturing of confection articles such as chocolate articles.

Confection articles such as lentils, solid balls and eggs, coffee beans and confection almonds can be produced by using a pair of counter rotating rollers having engravings or cavities on their cylindrical surface. The shapes of the articles to be produced are engraved in the two rollers.

The two rollers are positioned parallel substantially abutting one another. Liquid tempered chocolate or another fat-based mass is dosed into the nip of rollers where the roller surfaces are closest together. The liquid tempered chocolate is cooled and shaped between the rollers. The rollers, usually produced in stainless steel, are cooled to a low temperature by a cooling medium flowing through them. When passing through the roller nip the liquid chocolate takes the shape of the roller surfaces and a continuous band of shaped chocolates joined by a thin web of chocolate is formed. The band is then further cooled and is broken up, and the web material removed. Subsequently, the shaped chocolates can be polished, panned e.g. with a sugar coating or wrapped. Rollers of the above-described type are e.g. sold as "Eriksen Rollers" by Aasted, Denmark.

The capacity of the rollers depends on the cooling capacity of the rollers in the nip. Thus, the rotation speed of the rollers is limited by the solidification rate of the chocolate between the two rollers. If the chocolate is not sufficiently solidified the chocolate will tend to stick to the surface of the roller and there is a risk that the band of shaped articles joined by the thin web will tear. Also not sufficiently solid centres may be damaged or deformed by contact with take-off conveyor or collection hopper.

JP 62087056 relates to the production of an ice candy by using a pair of counter-rotating rolls.

WO 98/38871 relates to a process for the preparation of confectionery products wherein at least one first confectionery component is at least partially coated by at least one second confectionery component.

The present invention aims to increase the capacity of the rollers and improve the shape of the articles.

Accordingly, the present invention relates to a method of making food articles comprising
providing solidification liquid food,
providing a pair of parallelly arranged rollers having cavities defined on their outer cylindrical surface,
providing depositors for depositing the liquid food onto said rollers,
depositing the liquid food into the cavities on the first roller to provide a first separate part of a food article,
depositing the liquid food into the cavities on the second roller to provide a second separate part of a food article, and wherein the rollers are cooled so that the separate parts at least partly solidify at the outside of the product before being joined while still being capable of sticking to one another;
counter-rotating the rollers and joining the parts by the pressure they are subjected to when the roller surfaces are moved toward one another in the nip characterised in that the liquid food deposited onto the first roller and the liquid food deposited onto the second roller are different.

In an embodiment, depositing the liquid food into the cavities consists in filling the cavities with the liquid food and leaving a thin coating of product on the roller surfaces.

A solidifiable liquid product is a product which upon contact with the roller surfaces, which may be suitably chilled, at least partly solidifies at the outside of the product. The method is particularly suitable for food products which solidifies from about 20 to 35°C such as chocolate and fat-based confection.

It has surprisingly been found that food articles may be produced by firstly moulding separate parts of an article on separate rollers and afterwards joining the part of the article on one roller with counter part on the other roller by counter rotating the rollers. The counter rotations of the rollers brings the separate parts into contact and joining them by pressing or urging the parts against one another when they enter the nip. The nip is the point where the surfaces of the rollers are closest. In this way, articles can be provided by uniting separate parts of articles. It has been found that the joined articles are substantially homogenous pieces.

As the liquid food is dosed onto the rollers before the nip, the rotation speed of the rollers is not to the same extent limiting by the cooling capacity of the rollers. The solidification can happen when the roller surfaces move from the dosing station to the nip. It follows that the rollers may be rotated with a much higher speed, examples illustrating the increased capacity being given below. It is preferred that the rollers are chilled to maintain a cavity temperature in the range of about 0 to 20 °C.

For certain types of food material it may be possible to allow the parts of the articles to substantially solidify before they are brought into contact with their counter parts on the opposite roller and joining of the parts is done by the pressure they are subjected to when the roller surfaces are moved towards one another in the nip. For other types of products, it may be desirable that the food material is only partly solidified which may allow for a better adherence between the halves.

In the manufacturing of confection such as chocolate or fat-based confection, it is desirable that the liquid confection mass that is dosed onto the rollers only partly solidifies before the counter parts of the articles are joined. Alternatively, the parts may be solidified and a small amount of additional chocolate or fat-based confection can be dosed into the nip to act as an adhesive and to form a web in which the articles can sit for further processing.

Furthermore, it has surprisingly been found that it may be possible to produce hollow chocolate articles in accordance with the invention. A particularly suitable embodiment of the invention for this is described below.

In addition, in accordance with the invention it has been found that chocolate centres with inclusions may be produced. This can be done by depositing such inclusions, e.g. pieces of nuts, fruits, crisps etc, just before the chocolate parts are joined. The inclusions will thus be substantially embedded within the chocolate shells in the roller nip.

Furthermore, the invention may be useful for the manufacturing of chocolate articles or fat-based confection being a combination of different types of chocolate or fat-based confection. Examples of such articles are chocolates having a dark and white part, or chocolates having a milk and dark chocolate part.

It has been found that the present invention is particularly suitable for the production of confection articles such as chocolate or fat-based confection. Fat-based confection has an amount of fat, which performs the principal function in determining the texture, taste and eating qualities. However, it will be understood that the invention is not limited to application in this product area. The invention may advantageously be used for the shaping of other kinds of food articles, which can be made from a liquid food material that is solidifiable at ambient temperature. The discussion given in relation to the manufacturing of confection products thus is equally applicable to other types of food products the solidification and shaping of which is similar to that of the confection products. Examples, of other products, which may be manufactured in accordance with the invention are gums, jellies, pastilles, nut pralines, high-boiled sugar sweets, butter balls etc. The appropriate temperature of the liquid product and the roller temperature will depend on the product composition. For example, for sugar confection the solidification temperature may be above 120°C or more. On the savoury side products such as sauce pellets or cheese may be manufactured with the method of the invention.

In accordance with the invention, it has been found that the capacity of the rollers may be increased by as much as 100 % or even more when compared with the conventional system discussed above.

A suitable temperature for the tempered chocolate is from about 25 to 33 °C. The appropriate temperature depends on the ingredients in the chocolate blend used.

In a second aspect, the invention relates to an apparatus for making food articles comprising
a pair of parallelly arranged rollers having cavities defined on their outer cylindrical surface,
a first depositor for depositing solidifiable liquid food into the cavities on the first roller to provide a first separate part of a food article,
a second depositor for depositing the liquid food into the cavities on the second roller to provide a second separate part of a food article, and
means for counter-rotating the rollers to move the roller surfaces towards one another and to join the separate food article parts into one food article.

The invention will now be described in further detail by way of example only with reference to the accompanying drawings in which
Fig. 1 is a schematic drawing of an apparatus for carrying out the method of the present invention, and
Fig. 2 is a schematic drawing of an apparatus for manufacturing of hollow or two-component articles in accordance with the invention.

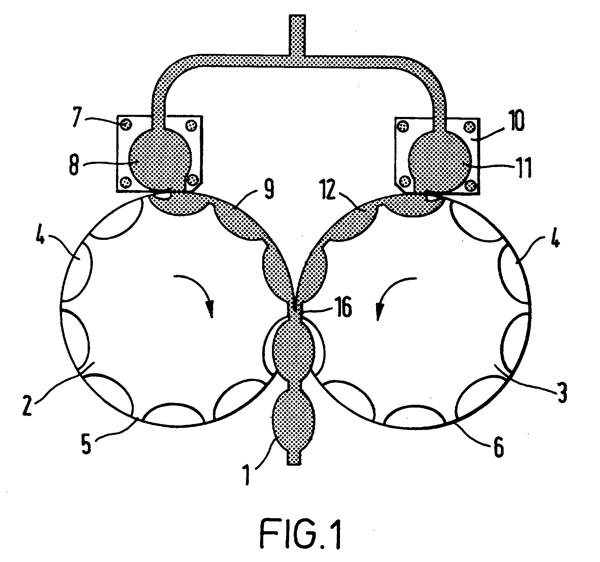

Fig. 1 shows an apparatus for performing a method of making food articles 1 according to the invention. The apparatus comprises a pair of parallelly arranged rollers 2 and 3 having cavities 4 defined on their outer cylindrical surfaces 5 and 6. A first depositor 7 is provided for depositing solidifiable liquid food 8 into the cavities 4 on the first roller 2 to provide a first separate part of a food article 9. The apparatus also has a second depositor 10 for depositing the liquid food 11 into the cavities 4 on the second roller 3 to provide a second separate part 12 of a food article. Motor means, of conventional type not shown in the drawings, are arranged for in use to counter-rotate the rollers 2 and 3, to move the surfaces 5 and 6 towards one another and to join the separate food article parts 9 and 12 into one food article 1 at the nip 16.

The first and second depositor 7 and 10 may be part of a depositing system. In the depositing system, the depositing of the product into the cavities may advantageously be done by means of two manifolds, one for each roller, each mounted in the close proximity to the roller periphery, e.g. approximately from 0.2 to 0.4 mm clear of the surface. Preferably the outlet of the manifolds are at a position above the vertical centre line of the axis of the rotation of the roller. Each manifold has a central hollow chamber and a vertical slot along the full length, which is connected via stainless steel pipe to a product supply pipeline. The product is pumped into the chamber of each of the manifold simultaneously, and escapes through the vertical slot onto the top surface of the rollers, filling the cavities of the roller surface, and leaving a thin coating of the product on the roller surfaces. The thickness of the coating is e.g. approximately from 0.4 to 0.6 mm, preferably approximately 0.5 mm.

The manifolds are preferably drilled lengthwise with small holes through which warm water is circulated. The temperature of the water is adapted to keep the food product liquid. For chocolate and fat-based confection a suitable temperature is about 30 °C.

The rollers 2 and 3, which are adapted to revolve in opposite directions, are preferably positioned in close proximity to each other. A preferred clearance is approximately 1 mm. A preferred rotation speed is typically from about 1 to 2 revolutions per minute for chocolate and fat-based confection. The rollers advantageously are cooled by a coolant circulation. For chocolate and fat-based confection the temperature of the circulating coolant approximately 18 to 22 °C, preferably about 20 °C. The liquid product preferably has a temperature in the range from about 28 to 35 °C when being dosed.

It is preferred that the food product in the cavities is still sufficiently melted so that one part 9 or 12 of the article 1 to be formed sticks to the other part 12 or 9 of the article on the other roller, forming a complete homogeneous piece, attached to adjacent articles by a thin web of food material. This web can later be removed by tumbling in a conventional way.

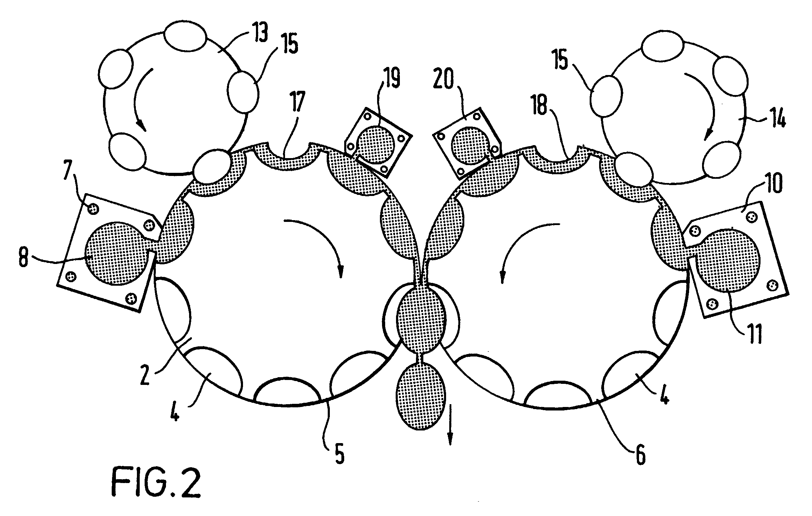

Fig. 2 shows an apparatus according to the invention adapted for the making of a hollow or two-component articles. In this embodiment of the apparatus moulding means in the form of a pair of rollers are arranged parallelly with the rollers 2 and 3. The rollers have projections 15 on their periphery which, when the rollers 13 and 14 are rotated, descends into the cavities 4 on the surface one or both of the rollers 2 and 3 at a position, in the direction of rotation, after the depositor and before the nip 16. The food article parts 17 and 18 thus formed may be joined in the nip 16 into a hollow article. If desired a centre component may be inserted by means of a second pair of depositors 19 and 20. This will allow two-component articles to be made. Equivalently, articles may be made by additional rollers and depositors. Restraints to this lie in the space available over the rollers for arranging such equipment.

Finally, for some food products which e.g. are less adhering when partly or fully solidified it may be desirable to have additional solidifiable liquid food deposited at the nip of the rollers.

## Claims

1. A method for making a food article comprising
providing solidifiable liquid
providing a pair of parallel arranged rollers (2, 3) having cavities (4) defined on their outer cylindrical surface,
providing depositors (7, 10) for depositing the liquid food onto said rollers,
depositing the liquid food into the cavities on the first roller to provide a first separate part (9) of the food article,
depositing the liquid food into the cavities on the second roller to provide a second separate part (12) of a food article and, wherein the rollers are cooled so that the separate parts (9, 12) at least partly solidify at the outside of the product before being joined while still being capable of sticking one another;
counter-rotating the rollers and joining the parts by the pressure they are subjected to when the roller surfaces are moved toward one another in the nip **characterized in that** the liquid food deposited onto the first roller and the liquid food deposited onto the second roller are different.

2. A method according to claim 1, wherein the solidifiable liquid food is dosed into the cavities (4) on the cylindrical surface of the rollers from 120 to 60 degrees of rotation before the nip, preferably from 100 to 80 degrees of rotation.

3. A method according to claims 1 or 2, wherein the temperature of the liquid food to be dosed is in the range of 28 to 35°C.

4. A method according to any of claims 1 to 3, wherein means is arranged for positioning an inclusion between the separate parts of the foods article before they are joined in the nip.

5. A method for making a food article comprising
providing solidifiable liquid
providing a pair of parallel arranged rollers (2, 3) having cavities (4) defined on their outer cylindrical surface,
providing depositors (7, 10) for depositing the liquid food onto said rollers,
depositing the liquid food into the cavities on the first roller to provide a first separate part of the food article,
depositing the liquid food into the cavities on the second roller to provide a second separate part of a food article and, wherein the rollers are cooled so that the separate parts at least partly solidify at the outside of the product before being joined while still being capable of sticking one another;
counter-rotating the rollers and joining the parts by the pressure they are subjected to when the roller surfaces are moved toward one another in the nip, **characterized in that** moulding means (13, 14, 15) are arranged for descending into the cavities on the surface of at least one of the rollers at a position, in the direction of rotation, after the depositor and before the nip.

6. A method according to claim 5, wherein the moulding means is an additional roller (13, 14) having projections (15) on its cylindrical surface.

7. A method according to any of claims 1 to 6, wherein additional solidifiable liquid food is deposited at the nip of the rollers.

8. A method for making a food article comprising
providing solidifiable liquid
providing a pair of parallel arranged rollers (2, 3) having cavities (4) defined on their outer cylindrical surface,
providing depositors (7, 10) for depositing the liquid food onto said rollers,
depositing the liquid food into the cavities on the first roller to provide a first separate part (9) of the food article,
depositing the liquid food into the cavities on the second roller to provide a second separate part (12) of a food article and, wherein the rollers are cooled so that the separate parts (9, 12) at least partly solidify at the outside of the product before being joined while still being capable of sticking one another;
counter-rotating the rollers and joining the parts by the pressure they are subjected to when the roller surfaces are moved toward one another in the nip **characterized in that** depositing the liquid food into the cavities consists in filling the cavities with liquid food and leaving a thin coating of the product on the roller surfaces (5, 6).

## Patentansprüche

1. Verfahren zum Herstellen eines Lebensmittels mit folgenden Schritten:
Bereitstellen einer verfestigbaren Flüssigkeit,
Bereitstellen eines Paar parallel angeordneter Walzen (2, 3), die Vertiefungen (4) aufweisen, die auf ihren Zylinderaußenflächen bestimmt sind,
Bereitstellen von Abscheidern (7, 10) zum Ablagern des flüssigen Lebensmittels auf den Walzen,
Ablagern des flüssigen Lebensmittels in die Vertiefungen auf der ersten Walze, um ein erstes separates Teil (9) des Lebensmittelartikels zu schaffen,
Ablagern des flüssigen Lebensmittels in die Vertiefungen auf der zweiten Walze, um ein zweites separates Teil (12) eines Lebensmittelartikels zu schaffen, wobei die Walzen derart gekühlt werden, daß sich die separaten Teile (9, 12) zumindest teilweise an der Außenseite des Produkts verfestigen, bevor sie verbunden werden, während sie noch fähig sind, aneinander zu haften; und
gegenläufiges Drehen der Walzen und Verbinden der Teile durch den Druck, dem sie unterworfen sind, wenn sich die Walzenflächen in dem Spalt aufeinander zu bewegen, **dadurch gekennzeichnet, daß** das flüssige Lebensmittel, das auf die erste Walze abgelagert wird, und das flüssige Lebensmittel, das auf die zweite Walze abgelagert wird, unterschiedlich sind.

2. Verfahren nach Anspruch 1, bei dem das verfestigbare flüssige Lebensmittel in die Vertiefungen (4) auf der Zylinderoberfläche der Walzen zwischen 120 bis 60 Grad Umdrehung vor dem Spalt dosiert wird, vorzugsweise zwischen 100 bis 80 Grad Umdrehung.

3. Verfahren nach Anspruch 1 oder 2, bei dem die Temperatur des zu dosierenden flüssigen Lebensmittels in den Bereich von 28 bis 35°C liegt.

4. Verfahren nach einem der Ansprüche 1 bis 3, bei dem eine Vorrichtung zur Anordnung eines Einschlusses zwischen den separaten Teilen des Lebensmittelartikels angeordnet ist, bevor sie in dem Spalt verbunden werden.

5. Verfahren zum Herstellen eines Lebensmittels mit den folgenden Schritten:
Bereitstellen einer verfestigbaren Flüssigkeit,
Bereitstellen eines Paars parallel angeordneter Walzen (2, 3), die Vertiefungen (4) aufweisen, die an ihren Zylinderaußenflächen bestimmt sind,
Bereitstellen von Abscheidern (7, 10) zum Ablagern des flüssigen Lebensmittels auf den Walzen,
Ablagern des flüssigen Lebensmittel in die Vertiefungen auf der ersten Walze, um ein erstes separates Teil des Lebensmittelartikels zu schaffen,
Ablagern des flüssigen Lebensmittel in die Vertiefungen auf der zweiten Walze, um ein zweites separates Teil eines Lebensmittelartikels zu schaffen, wobei die Walzen derart gekühlt werden, daß sich die separaten Teile zumindest teilweise an der Außenseite des Produkts verfestigen, bevor sie verbunden werden, während sie weiterhin fähig sind, aneinander zu haften; und
gegenläufiges Drehen der Walzen und Verbinden der Teile durch den Druck, dem sie unterworfen sind, wenn sich die Walzenoberflächen in dem Spalt aufeinander zu bewegen, **dadurch gekennzeichnet, daß** eine Formvorrichtung (13, 14, 15) zum Eintauchen in die Vertiefungen auf der Oberfläche von zumindest einer der Walzen an einer Stelle angeordnet ist, die in Drehrichtung hinter dem Abscheider und vor dem Spalt liegt.

6. Verfahren nach Anspruch 5, bei dem die Formvorrichtung eine zusätzliche Walze (13, 14) mit Vorsprüngen (15) auf ihrer Zylinderfläche ist.

7. Verfahren nach einem der Ansprüche 1 bis 6, bei dem zusätzliches verfestigbares flüssiges Lebensmittel an dem Spalt der Walzen abgelagert wird.

8. Verfahren zum Herstellen eines Lebensmittelartikels mit den folgenden Schritten:
Bereitstellen einer verfestigbaren Flüssigkeit,
Bereitstellen eines Paar parallel angeordneter Walzen (2, 3) mit Vertiefungen (4), die an der Zylinderaußenfläche bestimmt sind,
Bereitstellen von Abscheidern (7, 10) zum Ablagern des flüssigen Lebensmittels auf den Walzen,
Ablagern des flüssigen Lebensmittels in die Vertiefungen auf der ersten Walze, um ein erstes separates Teil (9) des Lebensmittelartikels zu schaffen,
Ablagern des flüssigen Lebensmittels in die Vertiefungen auf der zweiten Walze, um ein zweites separates Teil (12) eines Lebensmittelartikels zu schaffen, wobei die Walzen derart gekühlt werden, daß sich die separaten Teile (9, 12) an der Außenseite des Produkts zumindest teilweise verfestigen, bevor sie verbunden werden, während sie weiterhin fähig sind, aneinander zu haften, und
gegenläufiges Drehen der Walzen und Verbinden der Teile durch den Druck, dem sie unterworfen sind, wenn sich die Walzenflächen in dem Spalt aufeinander zu bewegen, **dadurch gekennzeichnet, daß** das Ablagern des flüssigen Lebensmittels in die Vertiefungen in dem Befüllen der Vertiefungen mit flüssigen Lebensmittel und dem Hinterlassen einer dünnen Beschichtung des Produkts auf den Walzenoberflächen (5, 6) besteht.

## Revendications

1. Procédé pour la préparation d'un article alimentaire, comprenant les étapes consistant
à fournir un liquide apte à se solidifier,
à utiliser une paire de rouleaux (2, 3) disposés parallèlement, ayant des cavités (4) définies sur leur surface cylindrique extérieure,
à utiliser des doseuses (7, 10) pour déposer l'aliment liquide sur lesdits rouleaux,
à déposer l'aliment liquide dans les cavités sur le premier rouleau pour former une première partie distincte (9) de l'article alimentaire,
à déposer l'aliment liquide dans les cavités sur le second rouleau pour former une seconde partie distincte (12) d'un article alimentaire, les rouleaux étant refroidis de telle sorte que les parties distinctes (9, 12) se solidifient au moins partiellement à l'extérieur du produit avant d'être jointes tout en étant encore capables d'adhérer l'une à l'autre ;
à soumettre les rouleaux à une contrarotation et à joindre les parties par la pression à laquelle elles sont soumises lorsque les surfaces des rouleaux sont déplacées l'une vers l'autre dans l'intervalle,
**caractérisé en ce que** l'aliment liquide déposé sur le premier rouleau et l'aliment liquide déposé sur le second rouleau sont différents.

2. Procédé suivant la revendication 1, dans lequel l'aliment liquide apte à se solidifier est introduit de manière dosée dans les cavités (4) sur la surface cylindrique des rouleaux de 120 à 60 degrés de rotation avant l'intervalle, de préférence de 100 à 80 degrés de rotation.

3. Procédé suivant la revendication 1 ou 2, dans lequel la température de l'aliment liquide à doser est comprise dans l'intervalle de 28 à 35°C.

4. Procédé suivant l'une quelconque des revendications 1 à 3, dans lequel un moyen est présent pour positionner une inclusion entre les parties distinctes de l'article alimentaire avant leur jonction dans l'intervalle.

5. Procédé pour la préparation d'un article alimentaire, comprenant les étapes consistant :
à fournir un liquide apte à se solidifier,
à utiliser une paire de rouleaux (2, 3) placés parallèlement, comportant des cavités (4) définies sur leur surface cylindrique extérieure,
à utiliser des doseuses (7, 10) pour déposer l'aliment liquide sur lesdits rouleaux,
à déposer l'aliment liquide dans les cavités sur le premier rouleau pour former une première partie distincte de l'article alimentaire,
à déposer l'aliment liquide dans les cavités sur le second rouleau pour former une seconde partie distincte d'un article alimentaire, les rouleaux étant refroidis de telle sorte que les parties distinctes se solidifient au moins partiellement à l'extérieur du produit avant d'être jointes tout en étant encore capables d'adhérer l'une à l'autre ;
à soumettre les rouleaux à une contrarotation et à joindre les parties par la pression à laquelle elles sont soumises lorsque les surfaces des rouleaux sont déplacées l'une vers l'autre dans l'intervalle,
**caractérisé en ce que** des moyens de moulage (13, 14, 15) sont présents pour descendre dans les cavités sur la surface d'au moins un des rouleaux à une position, dans le sens de rotation, après la doseuse et avant l'intervalle.

6. Procédé suivant la revendication 5, dans lequel les moyens de moulage consistent en un rouleau supplémentaire (13, 14) comportant des protubérances (15) sur sa surface cylindrique.

7. Procédé suivant l'une quelconque des revendications 1 à 6, dans lequel une quantité supplémentaire d'aliment liquide apte à se solidifier est déposée à l'intervalle des rouleaux.

8. Procédé pour la préparation d'un article alimentaire, comprenant les étapes consistant :
à fournir un liquide apte à se solidifier,
à utiliser une paire de rouleaux (2, 3) placés parallèlement, comportant des cavités (4) définies sur leur surface cylindrique extérieure,
à utiliser des doseuses (7, 10) pour déposer l'aliment liquide sur lesdits rouleaux,
à déposer l'aliment liquide dans les cavités sur le premier rouleau pour former une première partie distincte (9) de l'article alimentaire,
à déposer l'aliment liquide dans les cavités sur le second rouleau pour former une seconde partie distincte (12) d'un article alimentaire, les rouleaux étant refroidis de telle sorte que les parties distinctes (9, 12) se solidifient au moins partiellement à l'extérieur du produit avant d'être jointes tout en étant encore capables d'adhérer l'une à l'autre ;
à soumettre les rouleaux à une contrarotation et à joindre les parties par la pression à laquelle elles sont soumises lorsque les surfaces des rouleaux sont déplacées l'une vers l'autre dans l'intervalle,
**caractérisé en ce que** le dépôt de l'aliment liquide dans les cavités consiste en le remplissage des cavités avec l'aliment liquide en laissant un revêtement mince du produit sur les surfaces des rouleaux (5, 6).
